# EUROPÄISCHE PATENTSCHRIFT

(11) **EP 3 446 002 B1**
(45) Veröffentlichungstag und Bekanntmachung des Hinweises auf die Patenterteilung: **06.05.2020**
(21) Anmeldenummer: 17712090.4
(22) Anmeldetag: 17.03.2017
(51) Int. Cl.: F16H 61/32, F16H 63/20

(54) **SCHALTANORDNUNG FÜR EINEN KRAFTFAHRZEUGANTRIEBSSTRANG UND VERFAHREN ZU DEREN ANSTEUERUNG**
SHIFT ARRANGEMENT FOR A MOTOR VEHICLE DRIVETRAIN, AND METHOD FOR THE ACTUATION THEREOF
DISPOSITIF DE CHANGEMENT DE VITESSE POUR UNE CHAÎNE CINÉMATIQUE DE VÉHICULE AUTOMOBILE ET PROCÉDÉ DE COMMANDE

(30) Priorität: 18.04.2016 DE 102016107136
(43) Veröffentlichungstag der Anmeldung: 27.02.2019
(73) Patentinhaber: Magna PT B.V. & Co. KG, 74199 Untergruppenbach (DE)
(72) Erfinder: SCHALLER, Martin, 64732 Bad König (DE)
(74) Vertreter: Rausch, Gabriele
(86) Internationale Anmeldenummer: PCT/EP2017/056430
(87) Internationale Veröffentlichungsnummer: WO 2017/182205

(56) Entgegenhaltungen:
- DE-A1-102012 214 430
- DE-A1-102013 012 402
- US-A- 5 329 826
- US-A- 5 566 579
- US-A1- 2014 157 934

## Beschreibung

Die vorliegende Erfindung betrifft eine Schaltanordnung für einen Antriebsstrang eines Kraftfahrzeuges, mit einer Mehrzahl von Schaltkupplungspaketen, die jeweils eine oder zwei Schaltkupplungen aufweisen, wobei jede Schaltkupplung dazu ausgebildet ist, eine Gangstufe des Antriebsstranges einzulegen oder auszulegen, und mit einer manuellen Schalteinheit, die dazu ausgebildet ist, mittels eines manuell betätigbaren Schalthebels eine Wählbewegung zum Anwählen wenigstens eines der Schaltkupplungspakete und eine Schaltbewegung zum Einlegen einer Gangstufe des angewählten Schaltkupplungspaketes auszuführen.

Ferner betrifft die vorliegende Erfindung einen Antriebsstrang mit einem Antriebsmotor, mit einer Kupplung, die ein Eingangsglied, das mit dem Antriebsmotor verbunden ist, und ein Ausgangsglied aufweist, und mit einem Kraftfahrzeuggetriebe, das eine Schaltanordnung der oben bezeichneten Art beinhaltet, wobei das Kraftfahrzeuggetriebe einen Getriebeeingang aufweist, der mit dem Ausgangsglied der Kupplung verbunden ist.

Schließlich betrifft die vorliegende Erfindung ein Verfahren zum Ansteuern einer Schaltanordnung der oben beschriebenen Art in einem Antriebsstrang für ein Kraftfahrzeug.

Auf dem Gebiet der Antriebsstränge für Kraftfahrzeuge wird generell zwischen manuellen Antriebssträngen und automatisierten Antriebssträngen unterschieden. Bei einem manuellen Antriebsstrang wird die zwischen Antriebsmotor (in der Regel ein Verbrennungsmotor) und Kraftfahrzeuggetriebe angeordnete Kupplung, die in der Regel als Anfahrkupplung ausgebildet ist, manuell mittels eines Kupplungspedals im Fahrgastinnenraum betätigt. Ferner wird bei einem manuellen Antriebsstrang der Satz von Schaltkupplungspaketen in dem Kraftfahrzeuggetriebe manuell betätigt, und zwar mittels eines manuell betätigbaren Schalthebels, der im Fahrgastraum des Kraftfahrzeuges angeordnet ist und der mechanisch mit der mechanischen Schalteinheit verbunden ist. Die Schalteinheit kann beispielsweise eine Schaltwelle aufweisen, die Schalt- und Wählbewegungen in Form von Axial- bzw. Drehbewegungen durchführen kann. Eine solche Schaltwelle weist typischerweise wenigstens einen Schaltfinger auf, der zum Anwählen eines Schaltkupplungspaketes in eine Position verbracht wird, bei der der Schaltfinger bei einer Schaltbewegung der Schaltwelle eine Schaltkupplung des angewählten Schaltkupplungspaketes schließen kann, um eine zugeordnete Gangstufe einzulegen.

Kraftfahrzeuggetriebe in solchen manuellen Antriebssträngen beinhalten typischerweise vier, fünf, sechs, sieben oder mehr Gangstufen, die über einen manuell betätigbaren Schalthebel geschaltet werden können, der hierzu typischerweise in einem sogenannten H-Schaltschema bewegbar ist. Dies impliziert, dass den Schaltkupplungspaketen in dem Kraftfahrzeuggetriebe jeweils benachbarte Gangstufen zugeordnet sind, so dass jedem Schaltkupplungspaket eine Schaltgasse in dem H-Schaltschema entspricht.

Ferner gibt es auf dem Gebiet der Kraftfahrzeugantriebsstränge auch automatisierte Antriebsstränge. Bei diesen kann der grundsätzliche Aufbau ähnlich sein wie bei manuellen Antriebssträngen, wobei die Kupplung und die Schaltkupplungspakete automatisiert, beispielsweise durch Hydraulikanordnungen betätigt werden (sogenannte automatisierte Schaltgetriebe). Weiterhin können derartige Antriebsstränge Doppelkupplungsgetriebe beinhalten, deren Doppelkupplungsanordnung und Schaltkupplungspakete automatisiert betätigt werden. Schließlich beinhalten automatisierte Antriebsstränge auch Wandler-Automatikgetriebe, CVT-Getriebe, etc.

Ferner ist es auf dem Gebiet der Kraftfahrzeugantriebsstränge bekannt, Antriebsleistung von einer elektrischen Maschine bereitzustellen. Bei sogenannten reinen Elektrofahrzeugen beinhaltet der Antriebsmotor des Kraftfahrzeuges ausschließlich einer elektrischen Maschine, die über ein Kraftfahrzeuggetriebe mit wenigen Gangstufen (typischerweise eine Gangstufe oder zwei Gangstufen) Antriebsleistung auf angetriebene Räder übertragen kann. Eine solche elektrische Antriebsmaschine kann in beiden Drehrichtungen betrieben werden, so dass sowohl eine Vorwärts- als auch eine Rückwärtsfahrt auf einfache Weise eingerichtet werden kann.

Ferner sind sogenannten Hybrid-Antriebsstränge bekannt, die sowohl einen Verbrennungsmotor als Antriebsmotor als auch eine elektrische Maschine als Antriebsmotor beinhalten, wobei die Antriebsleistungen von Verbrennungsmotor und elektrischer Maschine auf verschiedene Art und Weise miteinander kombiniert werden können.

In vielen Fällen wird in diesem Fall eine Anfahrkupplung ebenfalls automatisiert betätigt, und Schaltkupplungspakete eines Stufengetriebes werden bei derartigen Hybrid-Antriebssträngen in der Regel ebenfalls automatisiert betätigt.

Bei automatisierten Antriebssträngen ist es bekannt, ein automatisiertes Parken durchzuführen. Hierbei wird nach Erkennen einer Parklücke ein automatisierter Fahrbetrieb eingerichtet, bei dem durch geeignete Sensorik die Lenkung des Kraftfahrzeuges automatisiert betätigt wird, aber auch Anfahrvorgänge automatisiert durchgeführt werden, um das Fahrzeug auf diese Art und Weise ohne Beeinflussung durch den Fahrer in eine Parklücke rangieren zu können. Weitere derartige Konzepte beinhalten eine Übergabe eines Kraftfahrzeuges im Bereich einer automatisierten Garage, bei der das Fahrzeug anschließend automatisiert und nach Aussteigen eines Fahrers in einen Parkraum einer Garage verfahren wird.

Aufgrund des jedenfalls bei niedrigen Fahrgeschwindigkeiten autonomen Fahrbetriebes kann ein solcher automatisierter Fahrbetrieb auch ferngesteuert eingeleitet werden, beispielsweise über eine Applikationssoftware (App) auf einem Mobilgerät wie einem Mobiltelefon, einem Tablet-Computer, oder dergleichen.

Schließlich ist es auch bekannt, den Fahrbetrieb eines Kraftfahrzeuges vollständig autonom durchzuführen, wobei Fahrbahnbegrenzungen und der sich bewegende Verkehr um das Fahrzeug herum erfasst werden und der Fahrbetrieb entsprechend autonom optimiert durchgeführt wird.

Aus der US 5 329 826 A ist ein Getriebe für ein Nutzfahrzeug bekannt, in dem unterschieidliche Getriebegruppen mit einem Schalthebel anwählbar sind, wobei die Aktuierung pneumatisch erfolgt.

US 5 556, 579 A zeigt Schaltschienen, die manuell betätigbar sind. Die Schaltschiene für höherer Gangstufen dient zum selektiven manuellen oder automatischen Schalten wischen den höchsten Gangstufen.

DE 10 2012 214430 A1 sieht vor, dass zum manuellen Schalten der manuell und automatisiert schaltbaren Gangkupplung A, B der fahrerseitige Schalthebel mit einer Schaltwelle verbunden ist, die achsparallel zu dem Schaltelement und axial verschiebbar sowie um ihre Längsachse drehbar angeordnet ist. An der Schaltwelle ist ein erster Mitnehmer ausgebildet, der bei einer in eine Drehbewegung der Schaltwelle übertragenen Wählbewegung des fahrerseitigen Schalthebels in das Schaltelement eingreift, und der im Eingriff mit dem Schaltelement bei einer in eine Längsbewegung der Schaltwelle übertragenen Schaltbewegung des fahrerseitigen Schalthebels das Schaltelement axial mitnimmt. Zum automatisierten Schalten der manuell und automatisiert schaltbaren Gangkupplung A, B ist eine mittels des Aktuators betätigbare Schaltwalze vorgesehen ist, die ortsfest und achsparallel zu dem Schaltelement sowie um ihre Längsachse drehbar angeordnet ist,

US 2014 157 934 A zeigt eine klassische H-Schaltung mit einer Schaltposition, die für die Betätigung einer automatischen Schaltung in einem Doppelkupplungsgetriebe vorgesehen ist.

DE10 2013 012 402 A1 zeigt eine Betätigungseinrichtung für ein Schaltgetriebe eines Nutzfahrzeugs mit mindestens einer Kupplungseinheit, mit Getriebestellmitteln zum mechanischen Betätigen des Schaltgetriebes und Kupplungsstellmitteln zur fluidischen Betätigung der Kupplungseinheit. In diesem Getriebe wird einen automatisierte Anfahrkupplung verwendet.

Vor dem obigen Hintergrund ist es eine Aufgabe der Erfindung, eine verbesserte Schaltanordnung für einen Kraftfahrzeugantriebsstrang, einen verbesserten Antriebsstrang sowie ein verbessertes Verfahren zum Ansteuern einer Schaltanordnung für einen Antriebsstrang eines Kraftfahrzeuges anzugeben.

Die obige Aufgabe wird durch eine Schaltanordnung für einen Antriebsstrang eines Kraftfahrzeuges gelöst, wobei die Schaltanordnung eine Mehrzahl von Schaltkupplungspaketen beinhaltet, die jeweils eine oder zwei Schaltkupplungen aufweisen, wobei jede Schaltkupplung dazu ausgebildet ist, eine Gangstufe des Antriebsstranges einzulegen oder auszulegen, wobei die Schaltanordnung ferner eine manuelle Schalteinheit beinhaltet, die dazu ausgebildet ist, mittels eines manuell betätigbaren Schalthebels eine Wählbewegung zum Anwählen wenigstens eines der Schaltkupplungspakete und eine Schaltbewegung zum Einlegen einer Gangstufe des angewählten Schaltkupplungspaketes durchzuführen, und wobei die Schaltanordnung eine automatisierte Schalteinheit aufweist, die wenigstens einen Aktuator beinhaltet und dazu ausgebildet ist, mittels des wenigstens einen Aktuators eine Wählbewegung zum Anwählen wenigstens eines der Schaltkupplungspakete und eine Schaltbewegung zum Einlegen einer Gangstufe des angewählten Schaltkupplungspaketes aufzuführen. Ferner wird die obige Aufgabe gelöst durch einen Antriebsstrang mit einem Antriebsmotor, mit einer Kupplung, die ein Eingangsglied, das mit dem Antriebsmotor verbunden ist, und ein Ausgangsglied aufweist, und mit einem Kraftfahrzeuggetriebe, das eine Schaltanordnung der erfindungsgemäßen Art beinhaltet, wobei das Kraftfahrzeuggetriebe einen Getriebeeingang aufweist, der mit dem Ausgangsglied der Kupplung verbunden ist, und wobei die Kupplung automatisiert betätigbar ist.

Schließlich wird die obige Aufgabe gelöst durch ein Verfahren zum Ansteuern einer erfindungsgemäßen Schaltanordnung in einem Antriebsstrang für ein Kraftfahrzeug bzw. zum Ansteuern eines solchen Antriebsstranges, mit den Schritten, zu erfassen, ob ein automatisierter Fahrbetrieb einzurichten ist, ferner für den Fall, dass ein automatisierter Fahrbetrieb einzurichten ist, eine Autofahr-Gangstufe in dem Antriebsstrang einzulegen, und zwar durch Anwählen und Schalten eines Schaltkupplungspaketes, das der Autofahrt-Gangstufe zugeordnet ist, mittels der automatisierten Schalteinheit, und mit dem weiteren Schritt, eine Anfahrkupplung des Antriebsstranges automatisiert zu schließen, um das Kraftfahrzeug automatisiert anzufahren.

Mit der vorliegenden Erfindung ist es möglich, in einem generell auf einen manuellen Fahrbetrieb ausgerichteten Antriebsstrang, der eine manuelle Schalteinheit zum Schalten von Gangstufen eines Getriebes beinhaltet, dennoch einen automatisierten Betrieb bzw. einen autonomen Fahrbetrieb zu realisieren. Insbesondere kann ein autonomes Rangieren erfolgen. Dies kann eingeleitet werden über Befehlseingabeeinrichtungen im Inneren eines Fahrgastraumes oder auch ferngesteuert über eine mobile Befehlseingabeeinrichtung, wie ein Mobiltelefon (Smartphone), auf dem eine geeignete App eingerichtet ist, oder dergleichen.

Bei dem Antriebsstrang ist dabei vorgesehen, dass die Kupplung automatisiert betätigbar ist. Dies bedeutet, dass die Kupplung entweder ausschließlich automatisiert betätigbar ist, beispielsweise mittels einer geeigneten Aktuatorik. In diesem Fall ist es generell bevorzugt, wenn bei Schaltvorgängen mittels des manuell betätigbaren Schalthebels durch Erfassen einer Bewegung oder einer Berührung des Schalthebels ein Kupplungsvorgang mittels der automatisiert betätigbaren Kupplung eingeleitet wird. Ferner kann eine derartige Kupplung automatisiert betätigt werden, um ein autonomes Fahren zu realisieren. Eine solche Kupplung kann jedoch auch generell eine manuell betätigbare Kupplung sein, die durch geeignete Zusatzmaßnahmen alternativ auch automatisiert betätigbar ist. Beispielsweise kann bei einer hydraulisch mittels eines Kupplungspedals betätigbaren Kupplung ein zusätzlicher Aktuator an die hydraulische Kraftübertragung angeschlossen werden. Dieser kann die Kupplung bedarfsweise ausrücken. Die Kupplung ist in diesem Fall und in allen anderen Fällen vorzugsweise eine normalerweise geschlossene Kupplung ("normally closed").

Gemäß einer weiteren bevorzugten Ausführungsform kann die Ansteuerung der Kupplung nach der Art "drive-by-wire" erfolgen. Hierbei kann ein Kupplungspedal beispielsweise eine Kupplungspedalsensorik (und ggf. eine Gegenkrafteinstelleinrichtung) beinhalten, wobei das Kupplungspedal in diesem Fall nur noch über eine elektronische Steuereinrichtung mit der eigentlichen Kupplung verbunden ist, die dann mittels eines Aktuators bedient bzw. betätigt wird.

Ferner beinhaltet die Schaltanordnung für den Antriebsstrang eine manuelle Schalteinheit, die einen manuell betätigbaren Schalthebel beinhaltet. Der Schalthebel ist vorzugsweise im Fahrgastraum angeordnet und ist vorzugsweise mechanisch mit der manuellen Schalteinheit gekoppelt, beispielsweise über einen Bowdenzug, ein Schaltgestänge oder dergleichen. Die manuelle Schalteinheit ist dazu ausgebildet, Betätigungen eines solchen Schalthebels von einem Fahrer rein mechanisch auf ein Schaltkupplungspaket zu übertragen, um mit diesem eine Gangstufe einzulegen oder auszulegen. Typischerweise beinhaltet eine derartige manuelle Schalteinheit eine Schaltwelle, die einen oder mehrere Schaltfinger aufweist, die mit Schaltelementen wie Schaltgabeln direkt mechanisch gekoppelt sind, oder indirekt, beispielsweise über eine Mehrzahl von parallel zueinander angeordneten Schaltstangen.

Die manuelle Schalteinheit ist vorzugsweise dazu ausgebildet, zumindest die höheren Gangstufen des Antriebsstranges zu bedienen, also vorzugsweise sämtliche Gangstufen ab der Gangstufe 3 und höher, also insbesondere Gangstufe 3, 4, 5, etc. bis einschließlich der höchsten Vorwärtsgangstufe. In manchen Ausführungsformen ist die manuelle Schalteinheit sogar dazu in der Lage, sämtliche Gangstufen des Antriebsstranges manuell zu betätigen, die für den gewöhnlichen Fahrbetrieb vorgesehen sind. Die Fahrstufen, die für den gewöhnlichen Fahrbetrieb vorgesehen sind, beinhalten aufeinander abgestufte Vorwärtsgangstufen, einschließlich einer Anfahrgangstufe 1, einer Gangstufe 2, einer Gangstufe 3, etc. bis einschließlich einer höchsten Gangstufe (beispielsweise Vorwärtsgangstufe 5, 6 oder 7), sowie eine Rückwärtsgangstufe.

Der Antriebsstrang beinhaltet vorzugsweise ein Kraftfahrzeuggetriebe in Form eines Vorgelegegetriebes, das in dem Kraftfahrzeug quer - oder in Längsrichtung eingebaut sein kann. Das Kraftfahrzeuggetriebe kann im Wesentlichen zwei Wellen aufweisen, die mittels schaltbarer Radsätze miteinander verbunden sind, wobei jeder Radsatz vorzugsweise einer Gangstufe entspricht. In manchen Fällen können auch Doppelnutzungen realisiert werden, insbesondere beim Front-Quer-Einbau.

Die automatisierte Schalteinheit ist vorzugsweise dazu ausgebildet, eines oder mehrere Schaltkupplungspakete anzuwählen, die niedrigen Gangstufen zugeordnet sind, also insbesondere der Anfahrgangstufe, ggf. auch der Gangstufe 2. Ferner beinhaltet die Anzahl der Gangstufen, die mittels der automatisierten Schalteinheit betätigbar sind, vorzugsweise auch die Rückwärtsgangstufe, um tatsächlich automatisiert rangieren zu können, also ggf. von einer Vorwärtsgangstufe in eine Rückwärtsgangstufe zu wechseln und umgekehrt.

Vorzugsweise ist die Schaltanordnung so ausgebildet, dass die automatisierte Schalteinheit wenigstens eine der normalen Gangstufen, insbesondere die höheren Gangstufen (d.h. Vorwärtsgangstufe 3 und noch höhere Gangstufen) nicht bedienen kann.

Die automatisierte Schalteinheit kann folglich nach der Art einer "kompakten" Add-On-Schalteinheit im Inneren des Kraftfahrzeuggetriebes integriert werden, wobei die automatisierte Schalteinheit vorzugsweise eine mittels eines Elektromotors betätigbare Schaltwalze aufweist.

Die Schaltwalze kann eine einzelne Schaltkontur beinhalten, kann jedoch auch zwei parallele Schaltkonturen beinhalten. Die Schaltwalze ist vorzugsweise dazu ausgebildet, zwei Schaltkupplungspakete zu betätigen, kann jedoch auch dazu ausgebildet sein, lediglich ein Schaltkupplungspaket zu betätigen, insbesondere dann, wenn das Schaltkupplungspaket gleichzeitig eine Rückwärtsgangstufe und eine Anfahrgangstufe (Vorwärtsgangstufe 1 oder auch Vorwärtsgangstufe 2) bedient.

Bei dem erfindungsgemäßen Verfahren kann automatisiert in einer mittels der automatisierten Schalteinheit angewählten und geschalteten Gangstufe angefahren werden. Das erfindungsgemäße Verfahren kann jedoch auch beinhalten, eine derart angewählte und geschaltete Gangstufe wieder auszulegen, und eine andere Gangstufe automatisiert einzulegen, also beispielsweise zwischen einer Anfahr-Vorwärtsgangstufe und einer Rückwärtsgangstufe zu wechseln.

Ferner kann das Verfahren beinhalten, einen Antriebsmotor automatisiert anzusteuern, beispielsweise durch automatisierte Betätigung einer Drosselklappe. Schließlich kann ein derartiges Verfahren auch beinhalten, Bremsen des Kraftfahrzeuges automatisiert zu betätigen, und auch, eine Lenkungseinrichtung des Kraftfahrzeuges automatisiert zu betätigen, um auf diese Weise Rangiervorgänge mit Vor- und Zurücksetzen vollständig autonom durchführen zu können.

Die Schaltanordnung ist vorzugsweise so ausgebildet, dass beim Durchführen von Anwähl- und Schaltvorgängen mittels der automatisierten Schalteinheit keine Bewegungen auf den manuell betätigbaren Schalthebel übertragen werden. Durch eine derartige Entkopplung kann eine Beeinflussung der automatisierten Betätigung vermieden werden, wie auch eine Gefährdung von Fahrgästen im Fahrgastraum.

Gemäß einer bevorzugten Ausführungsform ist der manuell betätigbare Schalthebel in eine Automatisierungsposition bewegbar.

Die Automatisierungsposition, in die der Schalthebel bewegbar ist, ist dabei keine jener Positionen, die der Schalthebel bei Nutzung der gewöhnlich verwendeten Fahrstufen einnimmt. Die Automatisierungsposition ist keiner speziellen Vorwärtsgangstufe und keiner speziellen Rückwärtsgangstufe zugeordnet. Bei Bewegung des Schalthebels in die Automatisierungsposition wird die automatisierte Schalteinheit aktiviert. Die Automatisierungsposition befindet sich vorzugsweise als Teil eines H-Schemas entweder in einer eigenen Schaltgasse, also einer Schaltgasse, die keiner der Gangstufen des Kraftfahrzeuggetriebes zugeordnet ist. Innerhalb einer solchen separaten Schaltgasse kann die Automatisierungsposition sich dann entweder in der Wählgasse befinden, also in der Neutralposition der normalen Gangstufen, oder aber in einer der Schaltpositionen. Alternativ ist es auch möglich, die Automatisierungsposition in einer Schaltgasse anzuordnen, deren andere Schaltpositionen einer der normalen Gangstufen (z.B. Rückwärtsgangstufe oder Gangstufe 1) zugeordnet ist.

Ferner ist es vorteilhaft, wenn die Schaltanordnung eine Manual-Entkopplungseinrichtung aufweist, die den manuell betätigbaren Schalthebel in der Automatisierungsposition von der manuellen Schalteinheit und/oder dem wenigstens einen zugeordneten Schaltkupplungspaket entkoppelt.

Die Entkopplung erfolgt dabei vorzugsweise mechanisch, derart, dass etwaige Bewegungen eines Schaltkupplungspaketes mittels der automatisierten Schalteinheit nicht zu Bewegungen des Schalthebels in dem Fahrgastraum führen.

Die Manual-Entkopplungseinrichtung kann beispielsweise dadurch realisiert sein, dass die manuelle Schalteinheit in eine Position verfahrbar ist, in der eine derartige Entkopplung eingerichtet ist. Diese Position der mechanischen Schalteinheit entspricht dabei vorzugsweise der Automatisierungsposition des Schalthebels, so dass diese Position mechanisch dann eingerichtet wird, wenn der Schalthebel in die Automatisierungsposition versetzt wird.

Zudem ist es vorteilhaft, wenn die Schaltanordnung eine Aktuator-Entkopplungseinrichtung aufweist, die den Aktuator von dem wenigstens einen zugeordneten Schaltkupplungspaket entkoppelt.

Die Aktuator-Entkopplungseinrichtung ist vorzugsweise dann wirksam, wenn der manuell betätigbare Schalthebel sich nicht in der Automatisierungsposition befindet, also in einer der anderen Positionen eines H-Schemas. Die Aktuator-Entkopplungseinrichtung kann als separat ansteuerbare Entkopplungseinrichtung ausgebildet sein. Vorzugsweise beinhaltet der Aktuator eine Schaltwalze, die zur Einrichtung der Aktuator-Entkopplungseinrichtung in eine Drehposition verdreht wird, bei der wenigstens ein Mitnehmer, der mit einer Schaltkontur der Schaltwalze in Eingriff steht, sich frei entsprechend Schaltbewegungen des zugeordneten Schaltkupplungspaketes bewegen kann.

Die Ausführungsform mit einer oder beiden solchen Entkopplungseinrichtungen ist vorzugsweise dann vorgesehen, wenn wenigstens ein Schaltkupplungspaket einer normalen Gangstufe sowohl von der manuellen Schalteinheit als auch von der automatisierten Schalteinheit betätigbar ist.

Gemäß einer weiteren bevorzugten Ausführungsform ist wenigstens ein Schaltkupplungspaket, das mittels der manuellen Schalteinheit anwählbar und schaltbar ist, nicht von der automatisierten Schalteinheit anwählbar oder schaltbar.

Mit anderen Worten sind mittels der automatisierten Schalteinheit nicht alle Gangstufen des Antriebsstranges anwählbar oder schaltbar. Vielmehr sind einige der normalerweise verwendeten Gangstufen ausschließlich mittels der manuellen Schalteinheit anwählbar und wählbar.

Das Schaltkupplungspaket, das dabei nicht von der automatisierten Schalteinheit anwählbar oder schaltbar ist, ist vorzugsweise ein Schaltkupplungspaket für eine höhere Gangstufe, insbesondere ein Schaltkupplungspaket, das keiner Anfahrgangstufe zugeordnet ist. Vorzugsweise sind sämtliche Schaltkupplungspakete, die den höheren Gangstufen (Gangstufe 3 und höher) zugeordnet sind, ausschließlich mittels der manuellen Schalteinheit anwählbar und schaltbar.

Gemäß einer bevorzugten Ausführungsform beinhaltet die Schaltanordnung dabei eine Sperreinrichtung, die dazu ausgebildet ist, ein Schaltkupplungspaket gegenüber Schaltbewegungen zu sperren, wobei die Sperreinrichtung so ausgebildet ist, dass sie das wenigstens eine Schaltkupplungspaket sperrt, das mittels der manuellen Schalteinheit und nicht von der automatisierten Schalteinheit anwählbar und schaltbar ist, und zwar dann, wenn ein Schaltkupplungspaket von der automatisierten Schalteinheit angewählt ist.

Mit anderen Worten sperrt die Sperreinrichtung wenigstens eines der ausschließlich von der manuellen Schalteinheit schaltbaren Schaltkupplungspakete, und zwar dann, wenn der Schalthebel in die Automatisierungsposition versetzt ist. Wenn der Schalthebel nicht in der Automatisierungsposition ist, sperrt die Sperreinrichtung vorzugsweise keines der Schaltkupplungspakete. Dies wird vorliegend gleichgesetzt mit einem Anwählen eines Schaltpaketes mittels der automatisierten Schalteinrichtung, auch wenn hierzu kein Bewegungsvorgang auf Seiten der automatisierten Schalteinheit von Nöten ist.

.Gemäß der erfindungsgemäßen Ausführungsform ist wenigstens ein Schaltkupplungspaket, das mittels der automatisierten Schalteinheit anwählbar und schaltbar ist, nicht von der manuellen Schalteinheit anwählbar oder schaltbar.

Bei der erfindungsgemäßen Ausführungsform kann die manuelle Schalteinheit kompakter ausgebildet werden. In diesem Fall ist beispielsweise im Bereich des Schalthebels vorzugsweise eine Sensorik vorgesehen, die erfasst, wenn der Schalthebel in eine Schaltposition bewegt wird, die einem Schaltkupplungspaket zugeordnet ist, das ausschließlich mittels der automatisierten Schalteinheit anwählbar und schaltbar ist. In diesem Fall wird dieses Sensorsignal dazu verwendet, um mittels einer Steuereinrichtung und des Aktuators die automatisierte Schalteinheit geeignet anzusteuern.

Ein Sensor zum Erfassen der Position des Schalthebels für diese Gangstufen kann im Bereich des Schalthebels selbst vorgesehen sein, kann jedoch auch im Bereich der manuellen Schalteinheit angeordnet sein.

Bei dieser Ausführungsform ist es Vorteil, wenn das Schaltkupplungspaket, das mittels der automatisierten Schalteinheit und nicht von der manuellen Schalteinheit anwählbar oder schaltbar ist, wenigstens eine Schaltkupplung aufweist, die einer Gangstufe eines Satzes von Gangstufen zugeordnet ist, die im normalen Fahrbetrieb des Kraftfahrzeuges zu verwenden sind.

Der Satz von Gangstufen, der im normalen Fahrbetrieb des Kraftfahrzeuges zu verwenden ist, beinhaltet vorzugsweise eine Anfahrgangstufe sowie mehrere sich vom Übersetzungsverhältnis daran anschließende Vorwärtsgangstufen, sowie wenigstens eine Rückwärtsgangstufe.

Bei dieser Ausführungsform wird folglich vorgesehen, dass wenigstens eine dieser Gangstufen ausschließlich mittels der automatisierten Schalteinheit anwählbar und schaltbar ist.

Insgesamt kann mit der vorliegenden Erfindung ein autonomes Rangieren auf der Basis eines konventionellen Handschaltgetriebes realisiert werden. Zwischen einem Verbrennungsmotor und einem manuellen Getriebe wird eine automatisierte Kupplung ("eClutch") vorgesehen.

Der Schalthebel kann ein Schaltknauf zwischen den Vordersitzen sein, kann jedoch auch ein Schaltknauf im Bereich eines Armaturenbrettes sein oder im Bereich eines Lenkrades.

Eine Steuerungseinheit des erfindungsgemäßen Antriebsstranges beinhaltet vorzugsweise eine Schnittstelle zu einem Fahrer für ein manuelles Schaltgetriebe mit gesteuerter Anfahrkupplung. Die Schnittstelle kann beispielsweise dadurch eingerichtet sein, dass ein Schaltknauf bzw. ein Schalthebel in einer Automatisierungsposition schaltbar ist.

Insgesamt ist die Schaltanordnung so realisiert, dass die im normalen Fahrbetrieb des Antriebsstranges verwendeten Gangstufen gesamthaft oder anteilig von der manuellen Schalteinheit betätigbar sind, zumindest jene Gangstufen, die nicht von der automatisierten Schalteinheit betätigt werden.

Die von der automatisierten Schalteinheit betätigten Gangstufen können sowohl eine Teilmenge der Gangstufen sein als auch als zusätzliche Gangstufen ausgeführt werden, wobei in letzterem Fall die Gesamtgangzahl die im normalen Fahrbetrieb verwendeten Gangstufen als auch die Sondergangstufen beinhaltet. Die Sondergangstufe bzw. die Sondergangstufen sind vorzugsweise mit Übersetzungen ausgestattet, die einem Anfahrgang und einem Rückwärtsgang entsprechen. Die Übersetzungen können vorzugsweise größer sein als jene einer normalen Anfahrgangstufe 1 und einer normalen Rückwärtsgangstufe, also so sein, dass das Rangieren nur mit sehr geringen Geschwindigkeiten erfolgen kann. Die Maximalgeschwindigkeit im Rangieren ist folglich vorzugsweise kleiner als die Maximalgeschwindigkeit, die mittels der gewöhnlich verwendeten Anfahrgangstufe erreichbar ist.

Vorzugsweise kann in dem automatisierten Fahrmodus bzw. autonomen Fahrbetrieb sowohl ein Rückwärtsfahren als auch ein Vorwärtsfahren realisiert werden. Der automatisierte Fahrbetrieb wird vorzugsweise mittels einer Verbrennungskraftmaschine (Verbrennungsmotor) bewerkstelligt.

Insgesamt ist vorteilhaft, dass auf der Basis eines Handschaltgetriebes mittels geringfügiger Modifikationen die Möglichkeit geschaffen wird, einen Teil von Gängen automatisiert zu schalten, wodurch ein autonomes Rangieren in Verbindung mit einer automatisierten Kupplung gegeben ist, wobei das autonome Rangieren entweder im Fahrzeug ausgelöst wird oder aber über eine App auf einem Mobilgerät.

Es versteht sich, dass die vorstehend genannten und die nachstehend noch zu erläuternden Merkmale nicht nur in der jeweils angegebenen Kombination, sondern auch in anderen

Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung eines Antriebsstranges für ein Kraftfahrzeug mit einer Ausführungsform einer erfindungsgemäßen Schaltanordnung;
Fig. 2 eine schematische Darstellung einer weiteren Ausführungsform einer erfindungsgemäßen Schaltanordnung in einer Position, bei der eine Anfahrgangstufe manuell angewählt ist;
Fig. 3 die Schaltanordnung der Fig. 2 in einer Position, bei der ein Schaltkupplungspaket für höhere Gangstufen manuell angewählt ist;
Fig. 4 eine der Fig. 3 vergleichbare Darstellung in einer Position, bei der ein Schaltkupplungspaket für die höchsten Gangstufen manuell angewählt ist;
Fig. 5 die Schaltanordnung der Fig. 2 bis 4 in einer Position, bei der eine Anfahrgangstufe mittels einer automatisierten Schalteinheit geschaltet ist;
Fig. 6 eine der Fig. 5 vergleichbare Darstellung, bei der eine Rückwärtsgangstufe mittels der automatisierten Schalteinheit geschaltet ist;
Fig. 7 eine vergleichende Darstellung von drei unterschiedlichen erfindungsgemäßen Schaltanordnungen;
Fig. 8 eine schematische Darstellung eines H-Schaltschemas mit möglichen Anordnungen einer Automatisierungsposition;
Fig. 9 eine Ausführungsform einer Schaltwalze für eine erfindungsgemäße Schaltanordnung;
Fig. 10 eine Ausführungsform einer Schaltwalze für eine erfindungsgemäße Schaltanordnung;
Fig. 11 eine Ausführungsform einer Schaltwalze für eine erfindungsgemäße Schaltanordnung; und
Fig. 12 eine Ausführungsform einer Schaltwalze für eine erfindungsgemäße Schaltanordnung.

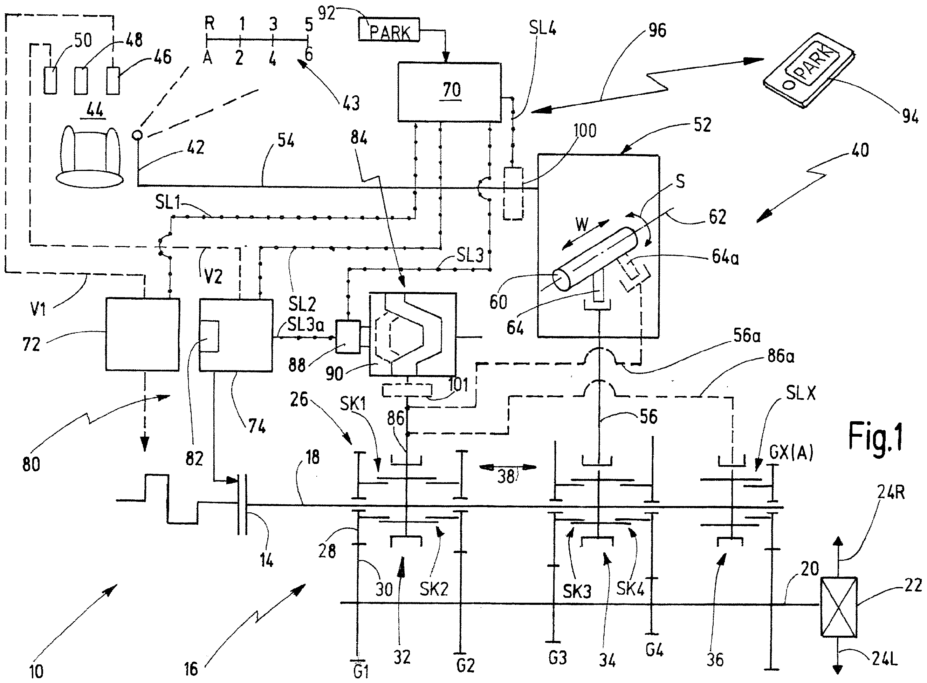

In Fig. 1 ist in schematischer Form ein Antriebsstrang für ein Kraftfahrzeug dargestellt und generell mit 10 bezeichnet.

Der Antriebsstrang 10 beinhaltet einen Antriebsmotor 12, der vorzugsweise als Verbrennungsmotor ausgebildet ist. Ferner weist der Antriebsstrang 10 eine Anfahrkupplung 14 auf, die vorzugsweise als trockene Kupplung ausgebildet ist, die vorzugsweise normalerweise geschlossen ist. Ein Eingangsglied (nicht näher dargestellt) der Anfahrkupplung 14 ist mit einem Ausgangsglied (Kurbelwelle) des Antriebsmotors 12 verbunden. Ein Ausgangsglied der Anfahrkupplung 14 ist mit einer Eingangswelle 18 eines Stufengetriebes 16 verbunden. Das Stufengetriebe 16 ist als Vorgelegegetriebe ausgebildet und beinhaltet eine zu der Eingangswelle 18 angeordnete Ausgangs- oder Vorgelegewelle 20, die direkt oder über eine weitere Übersetzungsstufe mit einem Differential 22 verbunden ist. Das Differential 22 ist dazu ausgebildet, Antriebsleistung auf angetriebene Räder 24L, 24R zu verteilen.

Vorliegend ist das Layout des Stufengetriebes 16 generell für den Längseinbau ausgelegt. Diese Darstellung ist jedoch rein beispielhaft. Das Stufengetriebe kann in gleicher Weise für eine Ausgestaltung zum Einbau front/quer im Fahrzeug ausgelegt sein.

In jedem Fall beinhaltet das Stufengetriebe 16 eine Mehrzahl von Radsätzen, von denen einer in Fig. 1 mit 26 bezeichnet ist, wobei der Radsatz 26 ein Losrad 28 und ein Festrad 30 aufweist. Das Losrad 28 ist vorliegend an der Eingangswelle 18 drehbar gelagert, könnte jedoch auch an der Vorgelegewelle/Ausgangswelle 20 drehbar gelagert sein. In jedem Fall ist das Losrad 28 über eine zugeordnete Schaltkupplung mit der zugeordneten Welle verbindbar, vorliegend die Schaltkupplung SK1 für das Losrad 28.

Genauer ist der Radsatz 26 der Anfahrgangstufe G1 zugeordnet. Das Stufengetriebe 16 beinhaltet ferner einen entsprechenden Radsatz für die Vorwärtsgangstufe G2 sowie entsprechende Radsätze für die Vorwärtsgangstufen G3 und G4 (und ggf. weitere Radsätze für Gangstufen G5, G6, ...). In der Regel beinhaltet das Stufengetriebe auch einen Radsatz für eine Rückwärtsgangstufe, was jedoch in Fig. 1 aus Gründen einer übersichtlicheren Darstellung nicht gezeigt ist.

In Fig. 1 ist noch ein weiterer Radsatz gezeigt, der einer Sondergangstufe (wird nachstehend noch beschrieben) zugeordnet ist, die in Fig. 1 schematisch mit GX(A) gekennzeichnet ist und die mittels einer Schaltkupplung SKX schaltbar ist.

Eine Schaltkupplung SK1 zum Schalten des Radsatzes für die Vorwärtsgangstufe G1 und eine Schaltkupplung SK2 für einen Radsatz zum Schalten der Vorwärtsgangstufe G2 sind in ein erstes Schaltkupplungspaket 32 integriert. Entsprechend sind Schaltkupplungen SK3, SK4 für die Vorwärtsgangstufen G3, G4 in ein zweites Schaltkupplungspaket 34 integriert.

Die Schaltkupplung SKX ist in ein separates drittes Schaltkupplungspaket 36 integriert.

Das Schaltkupplungspaket 36 mit der Schaltkupplung SKX und dem Radsatz GX(A) sind vorliegend optionale Bestandteile des Antriebsstranges 10.

Generell ist eine Axialrichtung, entlang der die Schaltkupplungspakete 32, 34, 36 betätigbar sind, in Fig. 1 mit 38 bezeichnet.

Zum Betätigen der Schaltkupplungspakete 32, 34, 36 ist eine Schaltanordnung 40 vorgesehen. Die Schaltanordnung 40 beinhaltet einen Schalthebel 42, der in an sich bekannter Weise in einem H-Schaltschema 43 bewegbar ist und der in einem Fahrgastraum 44 angeordnet ist. In dem Fahrgastraum 44 sind ferner ein Gaspedal 46, ein Bremspedal 48 sowie ein Kupplungspedal 50 angeordnet. Das Kupplungspedal 50 ist optional vorgesehen.

Die Schaltanordnung 40 beinhaltet ferner eine manuelle Schalteinheit 52. Die manuelle Schalteinheit 52 ist mittels einer mechanischen Kopplung 54 mit dem Schalthebel 42 gekoppelt. Die mechanische Kopplung 54 kann beispielsweise einen Bowdenzug oder ein Gestänge beinhalten. Ferner ist die manuelle Schalteinheit 52 über eine mechanische Kopplung mit dem zweiten Schaltkupplungspaket 34 verbunden, und zwar über eine mechanische Kopplung 56, die nach der Art einer Schaltgabel ausgebildet sein kann.

Die manuelle Schalteinheit 52 ist dazu ausgelegt, Schaltbewegungen S und Wählbewegungen W durchzuführen. Wählbewegungen W entsprechen Bewegungen entlang einer Wählgasse des H-Schaltschemas. Schaltbewegungen S entsprechen Bewegungen quer hierzu entlang jeweiliger Schaltgassen 1-2, 3-4, 5-6 oder R-A.

Die manuelle Schalteinheit 52 kann auf beliebige Art und Weise realisiert sein. Sie dient dazu, die auf den Schalthebel 42 ausgeübte manuelle Schaltkraft auf mechanische Art und Weise auf das Schaltkupplungspaket 34 und ggf. weitere Schaltkupplungspakete zu übertragen.

Beispielsweise weist die manuelle Schalteinheit 52 eine Schaltwelle 60 auf, die entlang einer Wellenachse 62 ausgerichtet ist. Beispielhaft entsprechen Wählbewegungen Axialbewegungen der Schaltwelle 60 und Schaltbewegungen S entsprechen Drehbewegungen der Schaltwelle 60 um die Wellenachse 62 herum. An der Schaltwelle 60 ist ein Schaltfinger 64 ausgebildet, der mit der mechanischen Kopplung 56 in Axialrichtung 38 formschlüssig gekoppelt ist, wenn das zweite Schaltkupplungspaket 34 angewählt ist. In Fig. 1 ist dargestellt, dass an der Schaltwelle 60 ein weiterer Schaltfinger 64a (und ggf. weitere Schaltfinger) angeordnet sein können, die beispielsweise über entsprechende mechanische Kopplungen 56a mit anderen Schaltkupplungspaketen (vorliegend beispielsweise das erste Schaltkupplungspaket 32) gekoppelt sein können.

Sofern die manuelle Schalteinheit 52 auch mit dem ersten Schaltkupplungspaket 32 gekoppelt ist, lassen sich Bewegungen des Schalthebels 42 in Bewegungen der Schaltkupplungspakete 32, 34 umsetzen, um auf diese Weise die Gangstufen G1 bis G4 schalten zu können. Aus Übersichtsgründen sind Schaltkupplungspakete für die Gangstufen 5, 6, ... und R in Fig. 1 nicht dargestellt. Zu diesem Zweck können jedoch weitere mechanische Kopplungen 56 vorgesehen sein, die entweder mit einem der Schaltfinger 64, 64a oder mit anderen Schaltfingern der Schaltwelle 60 in Eingriff stehen können.

Der Antriebsstrang 10 weist ein Antriebsstrang-Steuergerät 70 auf. Das Antriebsstrang-Steuergerät 70 kann beispielsweise mit einer Motorbetätigung 72 gekoppelt sein, und zwar über eine beispielhaft dargestellte Steuerleitung SL1. In entsprechender Weise kann die Motorbetätigung 72 mit dem Gaspedal 46 über eine Verbindung V1 gekoppelt sein, bei der es sich um eine mechanische Verbindung handeln kann oder um eine elektronische oder elektromechanische Verbindung, die beispielsweise nach der Art einer "By-Wire"-Verbindung eingerichtet ist, also mit einem Sensor an dem Gaspedal 46 und einem Aktuator in der Motorbetätigung 72.

In entsprechender Weise ist das Antriebsstrang-Steuergerät 70 mit einer Kupplungsbetätigung 74 verbunden, und zwar über eine Steuerleitung SL2. Die Kupplungsbetätigung 74 ist über eine Verbindung V2 mit dem Kupplungspedal 50 verbunden. Die Verbindung V2 kann eine mechanische oder eine hydraulische Verbindung sein, kann jedoch auch eine elektronische oder elektromechanische Verbindung sein.

In manchen Ausführungsformen kann auf das Kupplungspedal 50 verzichtet werden, in welchem Fall auch die Verbindung V2 entfällt.

Das Antriebsstrang-Steuergerät 70 ist vorzugsweise ebenfalls mit dem Bremspedal 48 verbunden, jedenfalls mit einer Bremsanlage. Ferner ist das Antriebsstrang-Steuergerät vorzugsweise mit einer Lenkeinrichtung des Kraftfahrzeuges verbunden.

Vorliegend ist ferner eine Teilautomatisierungseinrichtung 80 vorgesehen, die dazu ausgebildet ist, den Antriebsstrang 10 zumindest teilweise bzw. für bestimmte Situationen automatisiert betreiben zu können.

Die Teilautomatisierungseinrichtung 80 weist insbesondere einen Kupplungsaktuator 82 auf, der Teil der Kupplungsbetätigung 74 sein kann. Der Kupplungsaktuator 82 kann an eine mechanische oder hydraulische Betätigung (über die Verbindung V2) angeschlossen sein. In diesem Fall kann die Kupplung 14 beispielsweise in an sich herkömmlicher Weise manuell mittels des Kupplungspedals 50 betätigt werden, oder automatisiert mittels des Kupplungsaktuators 82.

In manchen Fällen kann der Kupplungsaktuator 82 jedoch auch Betätigungen des Kupplungspedals 50 ersetzen, das in diesem Fall auch entfallen kann. In diesem Fall kann eine Kupplungsbetätigung beispielsweise auch eingeleitet werden über ein Berühren oder Betätigen des Schalthebels 82, was dann entsprechend über eine geeignete Sensorik erfasst wird und dann eine Betätigung des Kupplungsaktuators 82 auslösen kann.

Die Teilautomatisierungseinrichtung 80 beinhaltet ferner eine automatisierte Schalteinheit 84.

Die automatisierte Schalteinheit 84 ist über eine Steuerleitung SL3 mit dem Antriebsstrang-Steuergerät 70 verbunden und beinhaltet eine über das Antriebsstrang-Steuergerät 70 ansteuerbare Aktuatorik, die über eine mechanische Kopplung 86 mit einem der Schaltkupplungspakete verbunden ist, vorliegend mit dem ersten Schaltkupplungspaket 32, das den unteren Gangstufen, insbesondere der Anfahrgangstufe G1 zugeordnet ist.

Vorliegend beinhaltet die automatisierte Schalteinheit 84 beispielhaft einen Elektromotor 88, der von dem Antriebsstrang-Steuergerät 70 über die Steuerleitung SL3 angesteuert wird, sowie eine Schaltwalze 90, die eine nicht näher bezeichnete Schaltkontur beinhaltet, die mit der mechanischen Kopplung 86 zusammenwirkt.

Alternativ oder zusätzlich kann der Elektromotor 88 oder der Aktuator der automatisierten Schalteinheit 84 auch mit der Kupplungsbetätigung 74 gekoppelt sein, und zwar über eine Steuerleitung SL3a, wie es in Fig. 1 schematisch angedeutet ist.

In Fig. 1 ist ferner angedeutet, dass die automatisierte Schalteinheit 84 optional über eine mechanische Kopplung 86a mit dem optionalen Schaltpaket 36 mechanisch gekoppelt sein kann, das einer Sondergangstufe GX zugeordnet ist.

Das zweite Schaltkupplungspaket 34 ist vorliegend nicht mittels der automatisierten Schalteinheit 84 betätigbar. Das ersten Schaltkupplungspaket 32 kann in einer Variante ausschließlich mittels der automatisierten Schalteinheit 84 betätigbar sein, kann jedoch auch, wie es in Fig. 1 durch eine gestrichelte mechanische Kopplung 56a angedeutet ist, zusätzlich auch mittels der manuellen Schalteinheit 52 betätigbar sein.

Mit dem Antriebsstrang 10 und der Schaltanordnung 40 des Antriebsstranges 10 kann ein autonomer bzw. teilautonomer Fahrbetrieb für bestimmte Fahrsituationen eingerichtet werden, und zwar insbesondere für ein Rangieren des Kraftfahrzeuges, beispielsweise zum Durchführen von Einparkvorgängen oder dergleichen.

Zu diesem Zweck ist das Antriebsstrang-Steuergerät 70 vorteilhafterweise mit wenigstens einer Befehlseingabeeinrichtung 92 gekoppelt, mittels der ein solches autonomes Rangieren, insbesondere zum Durchführen eines Parkvorganges ("PARK"), ausgelöst werden kann. Die Befehlseingabeeinrichtung 92 kann beispielsweise in einem Fahrgastraum 44 angeordnet sein, mittels einer speziellen Taste oder einer menügesteuerten Auswahl. Alternativ oder zusätzlich kann eine mobile Befehlseingabeeinrichtung 94 vorgesehen sein, die beispielsweise über eine Drahtlosverbindung 96 mit dem Antriebsstrang-Steuergerät 70 verbunden ist.

Die Drahtlosverbindung 96 kann eine direkte Verbindung sein, ist jedoch vorzugsweise eine Verbindung über ein Fahrzeugsteuergerät (nicht dargestellt), das wiederum mit dem Antriebsstrang-Steuergerät 70 kommuniziert. Die Drahtlosverbindung 96 kann beispielsweise eine Mobilfunkverbindung sein, kann eine Internetverbindung sein, kann aber auch eine Bluetooth-Verbindung sein, oder eine sonstige Drahtlosverbindung.

Bei der mobilen Befehlseingabeeinrichtung 94 kann es sich beispielsweise um einen mobilen elektronischen Computer handeln, insbesondere einen solchen, der auf einem Mobiltelefon oder auf einem Tablet implementiert ist, in Form eines Smartphones oder dergleichen. Auf dem Computer kann eine Applikationssoftware implementiert sein ("App"), mittels der ein Parkvorgang eingeleitet und/oder überwacht werden kann.

Hierbei kann eine Person beispielsweise einen Parkvorgang durchführen lassen, nachdem sie aus dem Fahrzeug ausgestiegen ist. Hierdurch kann ein Einparken in sehr engen Parklücken möglich sein, oder in teilautonomen Parkhäusern oder dergleichen.

Der autonome Fahrbetrieb, der mittels der Teilautomatisierungseinrichtung 80 ermöglichbar ist, wird vorzugsweise dadurch eingerichtet, dass der Schalthebel 42 in eine spezielle Position versetzt wird, die in Fig. 1 mit A bezeichnet ist. Diese Automatisierungsposition A aktiviert vorzugsweise die automatisierte Schalteinheit 84 und den Kupplungsaktuator 82. Das Durchführen von einem teilautonomen oder vollautonomen Fahrbetrieb, insbesondere ein autonomes Rangieren, wird dann gesteuert über das Antriebsstrang-Steuergerät 70, das den Kupplungsaktuator 82 und die automatisierte Schalteinheit 84 geeignet ansteuert. Das Antriebsstrang-Steuergerät 70 führt diese Aufgabe koordiniert mit einer Ansteuerung der Bremsanlage des Fahrzeugs und mit einer Lenkungseinrichtung des Fahrzeuges durch, und ist abhängig von einer Beobachtung der Umgebung des Fahrzeugs.

Beispielsweise kann ein Fahrer eines Kraftfahrzeuges die Automatisierungsposition A des Schalthebels 42 einrichten und anschließend das Fahrzeug verlassen. Ein autonomer Rangierbetrieb kann dann beispielsweise über die mobile Befehlseingabeeinrichtung 94 erfolgen.

In Fig. 1 ist bei 100 ferner eine Manual-Entkopplungseinrichtung schematisch dargestellt, die für den Fall, dass der Schalthebel 42 in die Automatisierungsposition A versetzt wird, den Schalthebel 42 von der manuellen Schalteinheit 52 mechanisch entkoppelt, so dass etwaige Bewegungen eines Elementes der manuellen Schalteinheit 52 und/oder Bewegungen eines Schaltkupplungspaketes während des autonomen Fahrbetriebes nicht auf den Schalthebel 42 übertragen werden, dieser also in der Automatisierungsposition A verbleibt.

Die Entkopplungseinrichtung 100 kann eine separate Entkopplungseinrichtung sein, die mittels des Antriebsstrang-Steuergerätes 70 angesteuert wird, beispielsweise über Leitung SL4. Die Entkopplungseinrichtung 100 kann jedoch auch durch spezielle Ausgestaltung der manuellen Schalteinheit 52 realisiert werden, beispielsweise durch eine bestimmte Wählposition oder Schaltposition der Schaltwelle 60, die sich aufgrund der Automatisierungsposition A einstellt.

In Fig. 1 ist bei 101 ferner schematisch eine Aktuator-Entkopplungseinrichtung dargestellt, die für den Fall, dass der Schalthebel 42 sich nicht in der Automatisierungsposition A befindet, den Aktuator (gebildet beispielsweise durch den Elektromotor 88 und die Schaltwalze 90) mechanisch von der zugeordneten Schaltkupplung (hier Schaltkupplungspaket 32) entkoppelt.

Wie bei der Manual-Entkopplungseinrichtung 100 kann die Aktuator-Entkopplungseinrichtung 101 eine separate Entkopplungseinrichtung sein, die mittels des Antriebsstrang-Steuergerätes 70 angesteuert wird, beispielsweise über eine nicht näher dargestellte Steuerleitung.

Für den Fall, dass der Aktuator eine Schaltwalze 90 beinhaltet, ist es bevorzugt, wenn eine Kontur der Schaltwalze eine Aktuator-Entkopplungskontur aufweist, die in einer vorbestimmten Entkopplungs-Drehposition der Schaltwalze Bewegungen eines Mitnehmers in Axialrichtung 38 frei zulässt, ohne dass die Schaltwalze 90 mitgedreht wird.

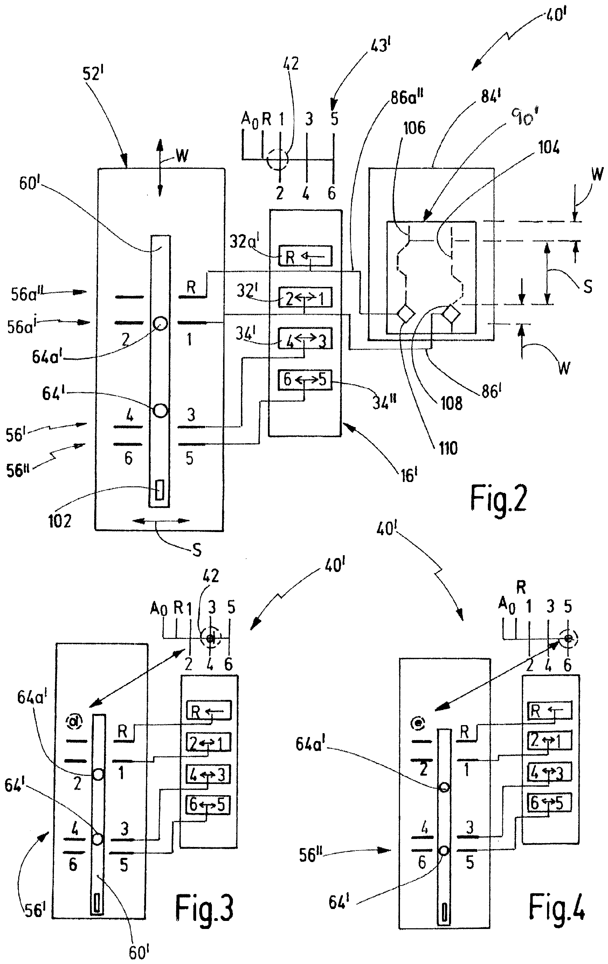

In Fig. 2 ist eine weitere Ausführungsform einer Schaltanordnung 40' dargestellt, die hinsichtlich Aufbau und Funktionsweise generell der Schaltanordnung 40 der Fig. 1 entspricht. Gleiche Elemente sind daher mit gleichen Bezugszeichen versehen. Im Folgenden werden im Wesentlichen die Unterschiede erläutert.

In Fig. 2 ist dargestellt, dass der Schalthebel 42 in einem H-Schaltschema 43' bewegbar ist, das eine Wählgasse sowie Schaltgassen 1-2, 3-4, 5-6, R sowie A₀ beinhaltet. Die Automatisierungsposition ist vorliegend bei A₀ dargestellt.

Ferner ist gezeigt, dass das Stufengetriebe 16' ein erstes Schaltkupplungspaket 32' für die Vorwärtsgangstufen 1, 2 beinhaltet, ein zweites Schaltkupplungspaket 34' für die Vorwärtsgangstufen 3, 4, ein weiteres erstes Schaltkupplungspaket 32a' für die Rückwärtsgangstufe R sowie ein weiteres zweites Schaltkupplungspaket 34" für die Vorwärtsgangstufen 6,5.

Die zweiten Schaltkupplungspakete 34', 34" sind mittels der manuellen Schalteinheit 52' ausschließlich betätigbar. Zu diesem Zweck weist die manuelle Schalteinheit 52' eine Schaltwelle 60' auf, die einen Schaltfinger 64' beinhaltet, sowie einen an der Schaltwelle axial versetzt hierzu angeordneten Schaltfinger 64a'.

Der Schaltfinger 64' ist den Schaltkupplungspaketen 34', 34" zugeordnet. Die entsprechenden mechanischen Kopplungen 56', 56" sind in Fig. 2 schematisch angedeutet. Der zweite Schaltfinger 64a' ist den ersten Schaltkupplungspaketen 32', 32a' zugeordnet. Entsprechend sind mechanische Kopplungen 56a', 56a" in Fig. 2 schematisch angedeutet. In Fig. 2 ist die Schaltwelle 60' in einer Wählposition W gezeigt, bei der der zweite Schaltfinger 64a' mit der mechanischen Kopplung 56a' ausgerichtet ist, die dem ersten Schaltkupplungspaket 32' für die Vorwärtsgangstufen 1-2 zugeordnet ist. Durch Versetzen der Schaltwelle 60' in Schaltrichtung S kann ausgehend von dieser Position mittels der manuellen Schalteinheit 52' entweder die Vorwärtsgangstufe 1 oder die Vorwärtsgangstufe 2 eingelegt werden.

Die Schaltwelle 60' kann ferner in die Wählposition versetzt werden, bei der der Schaltfinger 64a' mit der mechanischen Kopplung 56a" für die Rückwärtsgangstufe ausgerichtet ist, oder in eine Wählposition, bei der der erste Schaltfinger 64' mit der mechanischen Kopplung 56' für die Vorwärtsgangstufen 3, 4 ausgerichtet ist, oder in eine Wählposition, bei der der erste Schaltfinger 64' mit der mechanischen Kopplung 56" für die Vorwärtsgangstufen 5, 6 ausgerichtet ist.

In Fig. 2 ist hierzu dargestellt, dass sich der Schalthebel 42 in Wählposition in der Schaltgasse 1-2 des H-Schaltschemas 43' befindet.

Es ist ferner zu erkennen, dass sich in der Darstellung der Fig. 2 die automatisierte Schalteinheit 84' in einer Position befindet, bei der diese kein Schaltkupplungspaket geschaltet hat.

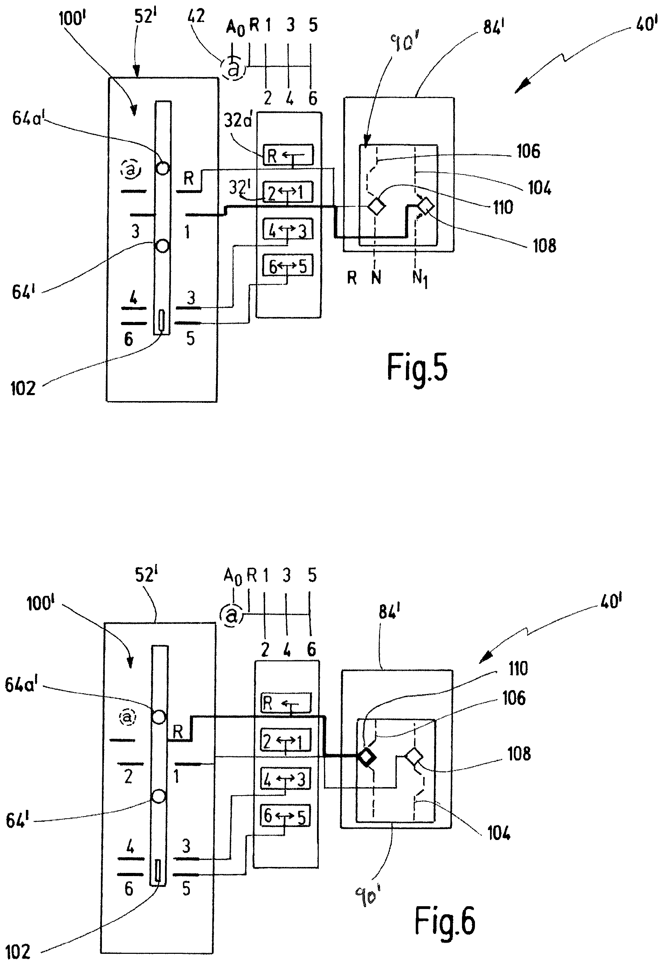

In Fig. 2 ist zudem schematisch eine Sperreinrichtung 102 dargestellt, die in einer Wählposition W der Schaltwelle 60' die mechanischen Kopplungen 56', 56" mechanisch sperrt, so dass in dieser Wählposition die Schaltkupplungspakete 34', 34" nicht betätigt werden können. Diese Schaltposition, auf die nachstehend unter Bezugnahme auf Fig. 5 und 6 eingegangen wird, wird eingerichtet, wenn die automatisierte Schalteinheit 84' aktiviert wird.

In Fig. 2 ist ferner schematisch angedeutet, dass sich bei Anwahl eines Schaltkupplungspaketes mittels der manuellen Schalteinheit 52' die automatisierte Schalteinheit 84' in einer Position befindet, bei der Mitnehmer in einer Neutralposition angeordnet sind, wie es in Fig. 2 dargestellt ist. In Fig. 2 ist beispielhaft eine Schaltwalze 90' dargestellt, die eine erste Schaltnut 104 und eine zweite Schaltnut 106 aufweist, die in Axialrichtung der Schaltwalze versetzt zueinander angeordnet sind. In die erste Schaltnut 104 greift ein erster Mitnehmer 108, der über eine mechanische Kopplung 86' mit dem ersten Schaltkupplungspaket 32' für die Vorwärtsgangstufen 1, 2 mechanisch gekoppelt ist. In die zweite Schaltnut 106 greift ein zweiter Mitnehmer 110, der mechanisch über eine mechanische Kopplung 86a" mit dem Schaltkupplungspaket 32a' für die Rückwärtsgangstufe gekoppelt ist.

In Fig. 2 ist schematisch angedeutet, dass die Schaltnuten 104, 106 einen Wählbereich W definieren sowie einen Schaltbereich S, innerhalb dessen die Gangstufen der Schaltkupplungspakete 32', 32a' alternativ schaltbar sind.

In Fig. 3 ist die Schaltanordnung 40' der Fig. 2 dargestellt, jedoch ohne automatisierte Schalteinheit 84. Es ist gezeigt, dass sich die Schaltwelle 60' in einer Wählposition befindet, bei der der erste Schaltfinger 64' mit der mechanischen Kopplung 56' für die Vorwärtsgangstufen 3, 4 ausgerichtet ist. In Fig. 4 ist eine ähnliche Darstellung gezeigt, bei der der erste Schaltfinger 64' mit der mechanischen Kopplung 56" für die Vorwärtsgangstufen 5, 6 ausgerichtet ist. In den Fällen der Fig. 3 und 4 befindet sich die automatisierte Schalteinheit 84' jeweils in der gleichen Position wie es in Fig. 2 gezeigt ist.

In den Fig. 5 und 6 ist gezeigt, dass die Gangstufen 1, 2 sowie R auch mittels der automatisierten Schalteinheit 84' ein- und auslegbar sind.

Hierzu wird der Schalthebel 42 zunächst in eine Wählposition versetzt, die in Fig. 5 mit a gekennzeichnet ist. In der Wählposition a sind die Schaltfinger 64' und 64a' mit keiner der mechanischen Kopplungen 56 ausgerichtet, so dass die mechanische Schalteinheit 52' von dem Schalthebel 42 insoweit mechanisch entkoppelt ist, dass Bewegungen der Schaltkupplungspakete 32', 32a' nicht zu Bewegungen des Schalthebels 42 führen, dieser also nicht mitgenommen wird.

In Fig. 5 ist gezeigt, dass der Mitnehmer 108 aufgrund einer Verdrehung der Schaltwalze 90' nun in eine Schaltposition versetzt ist, bei der die Vorwärtsgangstufe 1 geschaltet ist.

Fig. 6 zeigt eine Drehstellung der Schaltwalze 90', bei der der Mitnehmer 110 in die Schaltstellung versetzt ist, bei der die Rückwärtsgangstufe R eingelegt ist.

In Fig. 5 befindet sich der Mitnehmer 110 in der Neutralposition. In der Fig. 6 befindet sich der Mitnehmer 108 in der Neutralposition N.

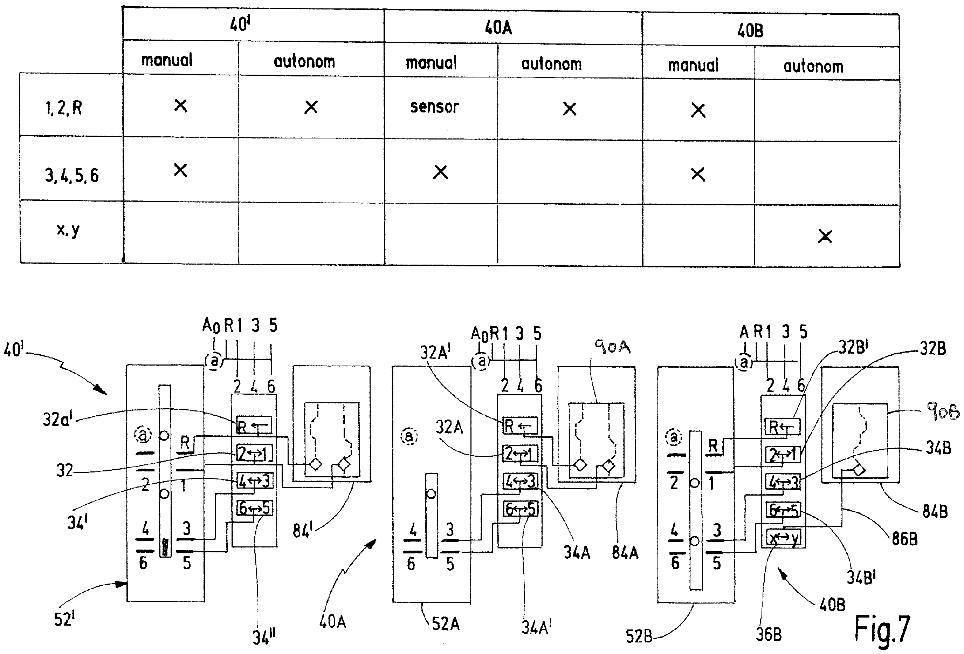

Fig. 7 zeigt einen Vergleich unterschiedlicher Schaltanordnungen, einschließlich der Schaltanordnung 40' der Fig. 2 bis 6 sowie von zwei weiteren erfindungsgemäßen Schaltanordnungen 40A und 40B.

Die Schaltanordnung 40' ist in Fig. 7 links gezeigt. Die Schaltanordnung 40A entspricht hinsichtlich Aufbau und Funktionsweise generell der Schaltanordnung 40'. Gleiche Elemente sind daher durch gleiche Bezugszeichen gekennzeichnet. Im Folgenden werden im Wesentlichen die Unterschiede erläutert. So ist im Gegensatz zu der Schaltanordnung 40' die manuelle Schalteinheit 52A lediglich dazu ausgelegt, entweder die Schaltkupplungen eines Schaltkupplungspaketes 34A für die Vorwärtsgangstufen 3, 4 oder die Schaltkupplungen eines Schaltkupplungspaketes 34A' für die Vorwärtsgangstufe 5, 6 zu betätigen. Die Schaltkupplungspakete 32A für die Vorwärtsgangstufen 1, 2 und 32A' für die Rückwärtsgangstufe sind bei der Schaltanordnung 40A ausschließlich mittels der automatisierten Schalteinheit 84A betätigbar, die eine Schaltwalze 90A aufweist, die gleich der Schaltwalze 90' der Fig. 2 ausgebildet sein kann. In Fig. 7 ist die Schaltanordnung 40A in der Automatisierungsposition gezeigt, bei der sich der Schalthebel in der Wählposition a befindet, ein einzelner Schaltfinger einer nicht näher bezeichneten Welle also folglich mit keiner der mechanischen Kopplungen für die Schaltkupplungspakete 34A, 34A' ausgerichtet ist.

In Fig. 7 ist in der zugeordneten Tabelle dargestellt, dass bei der Schaltanordnung 40' sich die Gangstufen 1, 2, R jeweils entweder über die manuelle Schalteinheit 52 oder mittels der automatisierten Schalteinheit 84 betätigen lassen. Ferner ist dargestellt, dass sich die Vorwärtsgangstufen 3, 4, 5, 6 ausschließlich mittels der manuellen Schalteinheit 52' betätigen lassen, nicht jedoch mittels der automatisierten Schalteinheit 84'.

Für die Schaltanordnung 40A ist in der Tabelle dargestellt, dass sich die Vorwärtsgangstufen 1, 2, R ausschließlich mittels der automatisierten Schalteinrichtung 84A betätigen lassen. Zur Erfassung, ob die automatisierte Schalteinheit 84A eine der Gangstufen 1, 2, R einlegen muss, dient eine Sensorik, die mit dem Schalthebel gekoppelt ist, jedoch in Fig. 7 nicht näher dargestellt ist. In der zugeordneten Tabelle ist hinsichtlich der manuellen Betätigung hierfür die Begrifflichkeit "Sensor" gewählt worden.

Wie bei der Schaltanordnung 40' lassen sich die Gangstufen 3, 4, 5, etc. ausschließlich mittels der manuellen Schalteinheit 52A betätigen.

Die weitere in Fig. 7 dargestellte Schaltanordnung 40B entspricht hinsichtlich Aufbau und Funktionsweise generell der Schaltanordnung 40'. Gleiche Elemente sind daher durch gleiche Bezugszeichen gekennzeichnet. Im Folgenden werden im Wesentlichen die Unterschiede erläutert.

Bei der Schaltanordnung 40B werden die für den normalen Fahrbetrieb verwendeten Gangstufen R, 1, 2, 3, 4, 5, 6 ausschließlich mittels der manuellen Schalteinheit 52B betätigt. Keine dieser Gangstufen kann mittels der automatisierten Schalteinheit 84B betätigt werden.

Die automatisierte Schalteinheit 84B ist hingegen über eine mechanische Kopplung 86B mit einem Schaltkupplungspaket 36B gekoppelt, mittels der Sondergangstufen x, y eingelegt werden können, beispielsweise eine Vorwärtsgangstufe x und eine Rückwärtsgangstufe y.

Die Übersetzungen der Sondergangstufen x, y können identisch sein mit den Übersetzungen der Vorwärtsgangstufe 1 bzw. der Rückwärtsgangstufe R, sind jedoch vorzugsweise höher übersetzt, derart, dass die mit den Sondergangstufen x, y einrichtbaren Höchstgeschwindigkeiten kleiner sind als jene, die mit der normalen Vorwärtsgangstufe 1 einrichtbar ist.

Die zugeordnete Tabelle zeigt, dass die Gangstufen 1, 2, R, 3, 4, 5, 6 ausschließlich manuell mittels der manuellen Schalteinheit 52B betätigbar sind, dass jedoch die Sondergangstufen x, y mittels der automatisierten Schalteinheit 84B betätigbar sind.

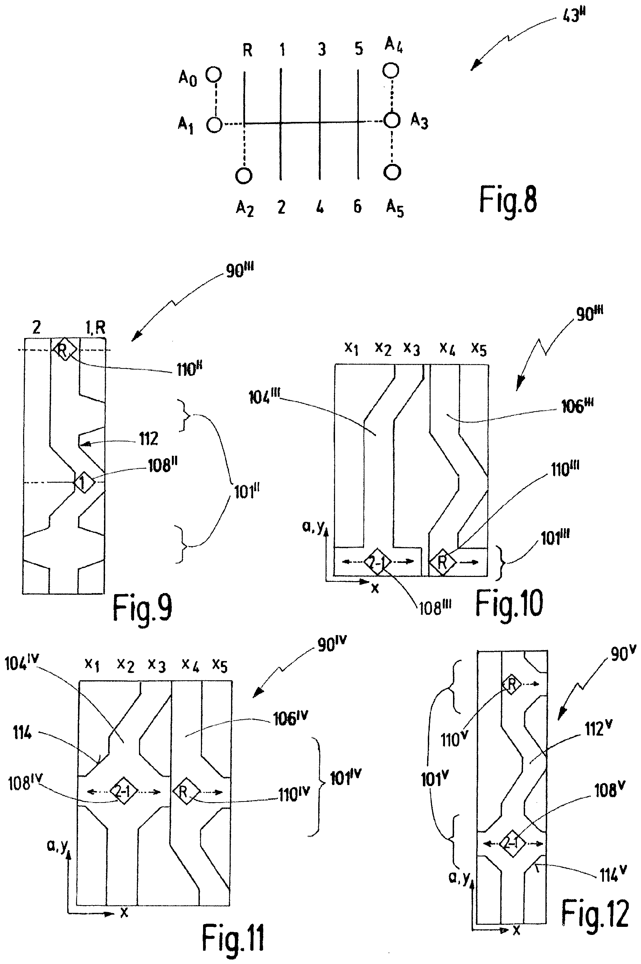

Fig. 8 zeigt ein H-Schema 43' mit möglichen Positionen für die Automatisierungsposition. Die Positionen A1, A3 befinden sich dabei innerhalb der Wählgasse. Alle Automatisierungspositionen A0 bis A5 befinden sich in Wählpositionen, die außerhalb des normalen Schaltschemas für die Gangstufen 1-6, R liegen. Lediglich die Automatisierungsposition A2 liegt in der gleichen Schaltgasse wie die Rückwärtsgangstufe R.

In den Fig. 9 bis 12 sind weitere Ausführungsformen von Schaltwalzen mit unterschiedlichen Schaltnuten bzw. Schaltkonturen dargestellt.

In den dargestellten Schaltnuten bzw. Schaltkonturen ist erkennbar, dass die Kontur bzw. die Konturen jeweils eine Aktuator-Entkopplungseinrichtung 101 aufweisen, die vorliegend gebildet ist durch spezielle Entkopplungs-Umfangsabschnitte der jeweiligen Schaltkontur bzw. Konturen. In diesen Umfangsabschnitten können der oder die Mitnehmer 108, 110 jeweils in Axialrichtung der Schaltwalze 90 frei bewegt werden, ohne dass sich die Schaltwalze 90 aufgrund einer solchen Axialbewegung (in den Fig. 9 bis 12 mit x bezeichnet) mit dreht.

Fig. 9 zeigt eine Schaltwalze 90", die eine Einzelnut 112 aufweist, innerhalb der sowohl ein Mitnehmer 108" für die Vorwärtsgangstufe 1 als auch einen Mitnehmer 110" für die Rückwärtsgangstufe R angeordnet ist. Fig. 10 zeigt eine Abwandlung einer Schaltwalze 90" mit zwei Schaltnuten 104"', 106"', die den Mitnehmern 108"', 110'" zugeordnet sind. Eine weitere Ausführungsform einer solchen Schaltwalze 90^{IV} mit zwei Schaltnuten 104^{IV}, 106^{IV} ist in Fig. 11 dargestellt.

Fig. 12 zeigt eine weitere Ausführungsform einer Schaltwalze 64V mit einer Einzelnut 112^{V}, innerhalb der sowohl der Mitnehmer 108^{V} als auch der Mitnehmer 110^{V} angeordnet sind.

In Fig. 9 ist eine Aktuator-Entkopplungseinrichtung 101" gezeigt, die zwei in Umfangsrichtung versetzt voneinander angeordnete Entkopplungsabschnitte aufweist. In Fig. 10 ist eine Aktuator-Entkopplungseinrichtung 101" gezeigt, die für jede Schaltnut 104"', 106'" jeweils einen Entkopplungsabschnitt aufweist, wobei die Entkopplungsabschnitte der zwei Nuten in Umfangsrichtung miteinander ausgerichtet sind.

Gleiches gilt für die Ausführungsform der Fig. 11, wo eine Aktuator-Entkopplungseinrichtung 101^{IV} gezeigt ist. Dort sind Übergänge zwischen der normalen Schaltnut 104^{IV} bzw. 106^{IV} und dem die Aktuator-Entkopplungseinrichtung 101^{lV} bildenden Umfangsabschnitt durch Abschrägungen bzw. Übergangskonturen 114 gebildet. Diese Übergangskonturen 114 sind derart ausgeführt, dass sichergestellt ist, dass manuell eingelegte Gangstufen bequem mittels der Schaltwalze (durch Drehen derselben) ausgelegt werden können, bevor eine Gangstufe automatisiert eingelegt wird.

Ähnliche Übergangskonturen sind auch in den Fig. 12 und in Fig. 9 zu erkennen. In Fig. 10 ist eine derartige Übergangskontur nicht vorhanden, so dass eine manuell eingelegte Gangstufe mittels der Schaltwalze 90'" nicht ausgelegt werden kann.

## Patentansprüche

1. Schaltanordnung (40) für einen Antriebsstrang (10) eines Kraftfahrzeuges, mit
- einer Mehrzahl von Schaltkupplungspaketen (32, 34, 36), die jeweils eine oder zwei Schaltkupplungen (SK) aufweisen, wobei jede Schaltkupplung (SK) dazu ausgebildet ist, eine Gangstufe (1-4; 1-6, R) des Antriebsstranges (10) einzulegen oder auszulegen,
- einer manuellen Schalteinheit (52), die dazu ausgebildet ist, mittels eines manuell betätigbaren Schalthebels (42) eine Wählbewegung (W) zum Anwählen wenigstens eines der Schaltkupplungspakete (32, 34, 36) und eine Schaltbewegung (S) zum Einlegen einer Gangstufe des angewählten Schaltkupplungspaketes auszuführen, und
- einer automatisierten Schalteinheit (84), die wenigstens einen Aktuator (88, 90) aufweist und dazu ausgebildet ist, mittels des wenigstens einen Aktuators (88, 90) eine Wählbewegung (W) zum Anwählen wenigstens eines der Schaltkupplungspakete (32, 34, 36) und eine Schaltbewegung (S) zum Einlegen einer Gangstufe des angewählten Schaltkupplungspaketes (32, 34, 36) auszuführen, **dadurch gekennzeichnet, dass**
- wenigstens ein Schaltkupplungspaket (36; 32A, 32A'; 36B), das mittels der automatisierten Schalteinheit (84) anwählbar und schaltbar ist, nicht von der manuellen Schalteinheit (52) anwählbar oder schaltbar ist, und
- das Schaltkupplungspaket (32A, 32A'), das mittels der automatisierten Schalteinheit (84A) und nicht von der manuellen Schalteinheit (52A) anwählbar oder schaltbar ist, wenigstens eine Schaltkupplung aufweist, die einer Gangstufe (1, 2; R) eines Satzes von Gangstufen (1 - 6, R) zugeordnet ist, die im normalen Fahrbetrieb des Kraftfahrzeuges zu verwenden sind.

2. Schaltanordnung nach Anspruch 1, wobei der manuell betätigbare Schalthebel (42) in eine Automatisierungsposition (A) bewegbar ist.

3. Schaltanordnung nach Anspruch 2, mit einer Manual-Entkopplungseinrichtung (100), die den manuell betätigbaren Schalthebel (42) in der Automatisierungsposition (A) von der manuellen Schalteinheit (52) entkoppelt.

4. Schaltanordnung nach einem der Ansprüche 1 - 3, mit einer Aktuator-Entkopplungseinrichtung (101), die den Aktuator (88, 90) von dem wenigstens einen zugeordneten Schaltkupplungspaket (32, 34, 36) entkoppelt.

5. Schaltanordnung nach einem der Ansprüche 1 - 4, wobei wenigstens ein Schaltkupplungspaket (34; 34', 34"; 34A, 34A'; 32B, 32B', 34B, 34B'), das mittels der manuellen Schalteinheit (52) anwählbar und schaltbar ist, nicht von der automatisierten Schalteinheit (84) anwählbar oder schaltbar ist.

6. Schaltanordnung nach Anspruch 5, mit einer Sperreinrichtung (102), die dazu ausgebildet ist, ein Schaltkupplungspaket gegenüber Schaltbewegungen zu sperren, wobei die Sperreinrichtung (102) so ausgebildet ist, dass sie das wenigstens ein Schaltkupplungspaket (34', 34") sperrt, das mittels der manuellen Schalteinheit (52) und nicht von der automatisierten Schalteinheit (34) anwählbar und schaltbar ist, wenn ein Schaltkupplungspaket (32) von der automatisierten Schalteinheit (84) angewählt ist.

7. Schaltanordnung nach einem der Ansprüche 1 - 6, wobei wenigstens ein Schaltkupplungspaket (32; 32, 32a'), das mittels der manuellen Schalteinheit (52) anwählbar und schaltbar ist, auch von der automatisierten Schalteinheit (84) anwählbar oder schaltbar ist.

8. Antriebsstrang mit
- einem Antriebsmotor (12),
- einer Kupplung (14), die ein Eingangsglied, das mit dem Antriebsmotor (12) verbunden ist, und und ein Ausgangsglied aufweist, und
- einem Kraftfahrzeuggetriebe (16) mit einer Schaltanordnung (40) nach einem der Ansprüche 1 7, wobei das Kraftfahrzeuggetriebe (16) einen Getriebeeingang (18) aufweist, der mit dem Ausgangsglied der Kupplung (14) verbunden ist, wobei die Kupplung (14) automatisiert betätigbar ist.

9. Verfahren zum Ansteuern einer Schaltanordnung (40) nach einem der Ansprüche 1 - 7 in einem Antriebsstrang (10) für ein Kraftfahrzeug, mit den Schritten:
- Erfassen, ob ein automatisierter Fahrbetrieb (A) einzurichten ist,
- falls ein automatisierter Fahrbetrieb (A) einzurichten ist, Einlegen einer Autofahr-Gangstufe (1, 2; 1, 2, R; X) in dem Antriebsstrang (10), und zwar durch Anwählen und Schalten eines Schaltkupplungspaketes (32; 32, 32a'; 32A, 32A'; 36B), das der Autofahr-Gangstufe zugeordnet ist, mittels der automatisierten Schalteinheit (84), und
- automatisiertes Schließen einer Anfahrkupplung (14) des Antriebsstranges, um das Kraftfahrzeug automatisiert anzufahren.

## Claims

1. Shift arrangement (40) for a drivetrain (10) of a motor vehicle, having
- a plurality of shifting clutch packs (32, 34, 36) which in each case have one or two shifting clutches (SK), each shifting clutch (SK) being configured to engage or to disengage a gear stage (1-4; 1-6, R) of the drivetrain (10),
- a manual shifting unit (52) which is configured, by means of a manually actuable gearshift lever (42), to carry out a selecting movement (W) for selecting at least one of the shifting clutch packs (32, 34, 36) and a shifting movement (S) for engaging a gear stage of the selected shifting clutch pack, and
- an automated shifting unit (84) which has at least one actuator (88, 90) and is configured, by means of the at least one actuator (88, 90), to carry out a selecting movement (W) for selecting at least one of the shifting clutch packs (32, 34, 36) and a shifting movement (S) for engaging a gear stage of the selected shifting clutch pack (32, 34, 36), **characterized in that**
- at least one shifting clutch pack (36; 32A, 32A'; 36B) which can be selected and shifted by means of the automated shifting unit (84) cannot be selected or shifted by the manual shifting unit (52), and
- the shifting clutch pack (32A, 32A') which can be selected or shifted by means of the automated shifting unit (84A) and not by the manual shifting unit (52A) has at least one shifting clutch which is assigned to a gear stage (1, 2; R) of a set of gear stages (1-6, R) which are to be used during normal driving operation of the motor vehicle.

2. Shift arrangement according to Claim 1, it being possible for the manually actuable gearshift lever (42) to be moved into an automation position (A).

3. Shift arrangement according to Claim 2, having a manual decoupling device (100) which decouples the manually actuable gearshift lever (42) from the manual shifting unit (52) in the automation position (A).

4. Shift arrangement according to one of Claims 1 to 3, having an actuator decoupling device (101) which decouples the actuator (88, 90) from the at least one associated shifting clutch pack (32, 34, 36).

5. Shift arrangement according to one of Claims 1 to 4, it not being possible for at least one shifting clutch pack (34; 34', 34"; 34A, 34A'; 32B, 32B', 34B, 34B') which can be selected and shifted by means of the manual shifting unit (52) to be selected or shifted by the automated shifting unit (84).

6. Shift arrangement according to Claim 5, having a locking device (102) which is configured to lock a shifting clutch pack with respect to shifting movements, the locking device (102) being configured in such a way that it locks the at least one shifting clutch pack (34', 34") which can be selected and shifted by means of the manual shifting unit (52) and not by the automated shifting unit (34) if a shifting clutch pack (32) is selected by the automated shifting unit (84).

7. Shift arrangement according to one of Claims 1 to 6, it also being possible for at least one shifting clutch pack (32; 32, 32a') which can be selected and shifted by means of the manual shifting unit (52) to be selected or shifted by the automated shifting unit (84).

8. Drivetrain having
- a drive motor (12),
- a clutch (14) which has an input member which is connected to the drive motor (12) and an output member, and
- a motor vehicle transmission (16) with a shift arrangement (40) according to one of Claims 1 to 7, the motor vehicle transmission (16) having a transmission input (18) which is connected to the output member of the clutch (14), it being possible for the clutch (14) to be actuated in an automated manner.

9. Method for actuating a shift arrangement (40) according to one of Claims 1 to 7 in a drivetrain (10) for a motor vehicle, having the steps:
- detecting whether automated driving operation (A) is to be set up,
- if automated driving operation (A) is to be set up, engaging of an automatic driving gear stage (1, 2; 1, 2, R; X) in the drivetrain (10), to be precise by way of selecting and shifting a shifting clutch pack (32; 32, 32a'; 32A, 32A'; 36B) which is assigned to the automatic driving gear stage, by means of the automated shifting unit (84), and
- automated closing of a start-up clutch (14) of the drivetrain, in order to start up the motor vehicle in an automated manner.

## Revendications

1. Dispositif de changement de vitesse (40) pour une chaîne cinématique (10) d'un véhicule automobile, comprenant
- une pluralité de groupes d'embrayages de changement de vitesse (32, 34, 36) qui comportent respectivement un ou deux embrayages de changement de vitesse (SK), dans lequel chaque embrayage de changement de vitesse (SK) est conçu pour enclencher ou désenclencher un rapport de vitesse (1-4; 1-6, R) de la chaîne cinématique (10),
- une unité de changement de vitesse manuelle (52) qui est conçue pour effectuer, au moyen d'un levier de changement de vitesse (42) pouvant être actionné manuellement, un déplacement de sélection (W) pour la sélection d'au moins l'un des groupes d'embrayages de changement de vitesse (32, 34, 36) et un déplacement de changement de vitesse (S) pour l'enclenchement d'un rapport de vitesse du groupe d'embrayages de changement de vitesse sélectionné, et
- une unité de changement de vitesse automatisée (84) qui comporte au moins un actionneur (88, 90) et qui est conçue pour effectuer, au moyen dudit au moins un actionneur (88, 90), un déplacement de sélection (W) pour la sélection d'au moins l'un des groupes d'embrayages de changement de vitesse (32, 34, 36) et un déplacement de changement de vitesse (S) pour l'enclenchement d'un rapport de vitesse du groupe d'embrayages de changement de vitesse sélectionné (32, 34, 36), **caractérisé en ce que**
- au moins un groupe d'embrayages de changement de vitesse (36 ; 32A, 32A' ; 36B), qui permet une sélection et un changement de vitesse au moyen de l'unité de changement de vitesse automatisée (84), ne permet pas une sélection ou un changement de vitesse par l'unité de changement de vitesse manuelle (52), et
- le groupe d'embrayages de changement de vitesse (32A, 32A'), qui permet une sélection ou un changement de vitesse au moyen de l'unité de changement de vitesse automatisée (84A) et non de l'unité de changement de vitesse manuelle (52A), comporte au moins un embrayage de changement de vitesse qui est associé à un rapport (1, 2 ; R) d'un ensemble de rapports de vitesse (1-6, R) qui doivent être utilisés pour la conduite normale du véhicule automobile.

2. Dispositif de changement de vitesse selon la revendication 1, dans lequel le levier de changement de vitesse (42) pouvant être actionné manuellement peut être déplacé dans une position d'automatisation (A).

3. Dispositif de changement de vitesse selon la revendication 2, comprenant un dispositif de débrayage manuel (100) qui débraye le levier de changement de vitesse manuel (42) vis-à-vis de l'unité de changement de vitesse manuelle (52) dans la position d'automatisation (A).

4. Dispositif de changement de vitesse selon l'une des revendications 1 à 3, comprenant un dispositif de débrayage d'actionneur (101) qui débraye l'actionneur (88, 90) vis-à-vis dudit au moins un groupe d'embrayages de changement de vitesse associé (32, 34, 36).

5. Dispositif de changement de vitesse selon l'une des revendications 1 à 4, dans lequel au moins un groupe d'embrayages de changement de vitesse (34 ; 34', 34" ; 34A, 34A' ; 32B, 32B', 34B, 34B'), qui permet une sélection et un changement de vitesse au moyen de l'unité de changement de vitesse manuelle (52), ne permet pas de sélection ou de changement de vitesse par l'unité de changement de vitesse automatisée (84).

6. Dispositif de changement de vitesse selon la revendication 5, comprenant un dispositif de verrouillage (102) qui est conçu pour verrouiller un groupe d'embrayages de changement de vitesse pour éviter des mouvements de changement de vitesse, dans lequel le dispositif de verrouillage (102) est conçu de telle sorte qu'il verrouille ledit au moins un groupe d'embrayages de changement de vitesse (34', 34"), qui permet une sélection et un changement de vitesse au moyen de l'unité de changement de vitesse manuelle (52) et ne permet pas une sélection et un changement de vitesse par l'unité de changement de vitesse automatisée (34) lorsqu'un groupe d'embrayages de changement de vitesse (32) est sélectionné par l'unité de changement de vitesse automatisée (84).

7. Dispositif de changement de vitesse selon l'une des revendications 1 à 6, dans lequel au moins un groupe d'embrayages de changement de vitesse (32 ; 32, 32a'), qui permet une sélection et un changement de vitesse au moyen de l'unité de changement de vitesse manuelle (52), permet également une sélection ou un changement de vitesse par l'unité de changement de vitesse automatisée (84).

8. Chaîne cinématique comprenant
- un moteur d'entraînement (12),
- un embrayage (14) qui comporte un organe d'entrée relié au moteur d'entraînement (12) et un organe de sortie, et
- une transmission de véhicule automobile (16) comportant un dispositif de changement de vitesse (40) selon l'une des revendications 1 à 7, dans laquelle la transmission de véhicule automobile (16) comporte une entrée de transmission (18) qui est reliée à l'organe de sortie de l'embrayage (14), dans laquelle l'embrayage (14) peut être actionné automatiquement.

9. Procédé de commande d'un dispositif de changement de vitesse (40) selon l'une des revendications 1 à 7 dans une chaîne cinématique (10) pour un véhicule automobile, comprenant les étapes consistant à :
- détecter si un mode de conduite automatisé (A) doit être établi,
- si un mode de conduite automatisé (A) doit être établi, enclencher un rapport de vitesse de conduite de la voiture (1, 2 ; 1, 2, R ; X) dans la chaîne cinématique (10) par sélection et changement de vitesse d'un groupe d'embrayages de changement de vitesse (32 ; 32, 32a' ; 32A, 32A' ; 36B), qui est associé au rapport de vitesse de conduite, au moyen de l'unité de changement de vitesse automatisée (84), et
- fermer automatiquement un embrayage de démarrage (14) de la chaîne cinématique afin de démarrer automatiquement le véhicule automobile.
